# FASCICULE DE BREVET EUROPEEN

(11) **EP 3 015 202 B1**
(45) Date de publication et mention de la délivrance du brevet: **25.09.2019**
(21) Numéro de dépôt: 15191128.6
(22) Date de dépôt: 22.10.2015
(51) Int. Cl.: B23B 35/00, A47J 27/00, H05B 1/02

(54) **PROCEDE POUR LE PERCAGE D'UN TUNNEL DE RECEPTION D'UN CAPTEUR DANS UN RECIPIENT DE CUISSON ET RECIPIENT ISSU D'UN TEL PROCEDE**
VERFAHREN ZUM BOHREN EINES AUFNAHMETUNNELS FÜR EINEN SENSOR IN EINEN KOCHBEHÄLTER, UND AUS DIESEM VERFAHREN HERVORGEGANGENER KOCHBEHÄLTER
METHOD FOR DRILLING A TUNNEL FOR RECEIVING A SENSOR IN A COOKING VESSEL AND VESSEL OBTAINED FROM SUCH A METHOD

(30) Priorité: 03.11.2014 FR 1460585
(43) Date de publication de la demande: 04.05.2016
(73) Titulaire: SEB S.A., 69130 Ecully (FR)
(72) Inventeur: LINGLIN, Benoît, 74370 SAINT MARTIN BELLEVUE (FR); PERREAL, Sylvain, 74150 RUMILLY (FR); CHARVIN, Stéphane, 74540 SAINT FELIX (FR)
(74) Mandataire: Bourrières, Patrice

(56) Documents cités:
- EP-A1- 1 591 049
- EP-A1- 2 301 393
- DE-A1-102008 015 973
- US-A- 5 620 255

## Description

La présente invention concerne un procédé pour le perçage d'un tunnel de réception d'un capteur dans un récipient de cuisson selon le préambule de la revendication 1 et un récipient de cuisson selon le préambule de la revendication 13. Le récipient de cuisson est destiné à être disposé sur une plaque de cuisson, un brûleur ou analogue pour la cuisson d'aliments notamment une poêle, une casserole, une sauteuse, un faitout ou un autocuiseur. Un tel procédé et un tel récipient de cuisson sont connus du document EP 1 591 049 A.

On connaît du document EP1591049 un récipient de cuisson comportant un fond et un capteur de température agencé dans un tunnel de réception réalisé dans le fond. Le procédé de réalisation du tunnel de réception du capteur, divulgué par ce document comporte une étape de perçage.

Cependant, les récipients de cuisson standard comportent des fonds dont l'épaisseur varie, par exemple, de 4 millimètres à 6 millimètres. Ainsi, un tunnel de réception réalisé par perçage devra mettre en oeuvre un foret de faible diamètre pour qu'il subsiste une épaisseur de matière du fond de part et d'autre du trou percé. Cette épaisseur de matière peut ne pas dépasser quelques dixièmes de millimètres. De plus, pour suivre notamment une température de manière pertinente et efficace, il est nécessaire d'agencer le capteur dans le fond du récipient de cuisson de manière suffisamment déportée par rapport au bord de la calotte, par exemple, en positionnant une partie sensible du capteur à une distance d'au moins 50 millimètres du bord.

Ainsi, un tel procédé pour la réalisation d'un tunnel de réception d'un capteur par perçage met en oeuvre un foret de petit diamètre et de grande longueur qui va être très fragile et va s'user prématurément.

De plus, l'épaisseur du fond qui est très proche du diamètre du foret n'autorise aucune déviation du foret lors du perçage, ce qui oblige à travailler à des cadences de production faibles.

Enfin, le tunnel de réception est réalisé dans un fond qui est notamment en aluminium. Un perçage avec un foret de petit diamètre et de grande longueur, conduit à une grande concentration de chaleur en pointe du foret, ainsi qu'à une grande difficulté d'évacuation des copeaux hors du trou qui « collent » au foret, ayant pour conséquence des temps de débourrage longs et des déformations du trou fréquentes.

Le but de la présente invention est de remédier aux inconvénients précités et de proposer un procédé pour le perçage d'un tunnel de réception d'un capteur dans un récipient de cuisson qui soit économique à mettre en oeuvre.

Un autre but de la présente invention est de proposer un procédé pour le perçage d'un tunnel de réception d'un capteur dans un récipient de cuisson qui permette d'obtenir un tunnel aux dimensions maitrisées et constantes d'un récipient à l'autre.

Selon l'invention, ces buts sont atteints avec un procédé pour le perçage d'un tunnel de réception d'un capteur, notamment d'un capteur de température, dans un récipient de cuisson selon la revendication 1 comportant une calotte comprenant un fond présentant une épaisseur (e) dans laquelle ledit tunnel de réception est réalisé, caractérisé en ce que ledit procédé comporte une étape de pré-perçage mettant en oeuvre un foret de diamètre D1 pour réaliser une première portion du tunnel de réception et une étape de perçage profond mettant en oeuvre un foret de diamètre D2 pour réaliser une deuxième portion du tunnel de réception, D1 étant supérieur à D2.

Une première portion correspondant à un premier trou est donc réalisée lors de l'étape de pré-perçage. Ce premier trou va servir de canon de centrage et va permettre de stabiliser l'extrémité du foret plus long utilisé à l'étape de perçage profond pour réaliser la deuxième portion, le débattement radial de l'extrémité du foret plus long étant limité par la paroi du premier trou. En effet, un foret par construction n'est jamais parfaitement rectiligne. Il comporte toujours un faux rond. Ainsi, un bon guidage de l'extrémité du foret plus long permet de réaliser la deuxième portion sous la forme d'un deuxième trou dans l'axe du premier et permet d'obtenir un tunnel rectiligne, sans déviation, aux dimensions maitrisées et constantes d'un récipient de cuisson à l'autre.

De manière avantageuse, les étapes de pré-perçage et de perçage profond sont réalisées de manière successive pour permettre d'optimiser la cadence de production.

Avantageusement, le rapport entre diamètre D1 et le diamètre D2 est compris 1,005 et 1,05 de préférence entre 1,01 et 1,02.

Ainsi, le foret long mis en oeuvre à l'étape de perçage profond comporte un diamètre D2 très légèrement inférieur au foret court mis en oeuvre à l'étape de pré-perçage. Cette disposition permet de réaliser un excellent centrage de l'extrémité du foret long tout en minimisant les frottements du foret long de diamètre D2 dans le trou réalisé par le foret court de diamètre D1.

De préférence, le diamètre D2 est compris entre 2 et 3 millimètres, de préférence 2, 5 millimètres.

L'épaisseur minimum du fond d'un récipient de cuisson standard est d'environ 4mm. Un tel diamètre permet donc de réaliser un tunnel de réception compatible avec toutes les gammes de récipients de cuisson.

Avantageusement, la première portion du tunnel de réception présente une profondeur (P1) et la deuxième portion présente une profondeur (P2), le rapport entre P2 et P1 étant compris entre 2 et 5, de préférence entre 3 et 4,5.

Cette disposition permet d'obtenir un temps pour mettre en oeuvre l'étape de pré-perçage sensiblement inférieur au temps pour mettre en oeuvre l'étape de perçage profond et ainsi, on peut optimiser la cadence de production.

De préférence, la profondeur (P2+P1) du tunnel de réception est comprise entre 50 et 70 millimètres, de préférence 60 millimètres.

Ainsi, un capteur agencé dans le fond d'un tunnel de réception présentant une telle profondeur sera suffisamment déporté par rapport au bord de la calotte du récipient de cuisson pour détecter un paramètre, notamment une température, représentatif de l'état des aliments contenus dans le récipient, quelle que soit la taille du fond du récipient de cuisson.

Dans un mode de réalisation avantageux, à au moins une étape de perçage, une tête de perçage met en rotation un foret et génère un mouvement d'avance axiale dudit foret sur lequel est superposé une oscillation axiale à une fréquence donnée. De préférence, la fréquence de l'oscillation axiale appliquée au foret est une basse fréquence de quelques hertz. Un tel perçage est, par exemple, décrit dans le document US2453136.

Un tel perçage permet un fractionnement régulier des copeaux. En conséquence, les phénomènes de bourrage de copeaux sont éliminés et la diminution du risque de bris d'outils qui en résulte fiabilise le procédé. De plus, la durée de vie du foret est allongée. En effet le foret ne travaille que pendant une partie du temps du fait de la coupe qui devient interrompue à une fréquence optimum, ce qui permet à l'outil de se refroidir entre chaque phase de coupe.

Avantageusement, aux étapes de pré-perçage et de perçage profond, les forets sont entrainés en rotation à une vitesse de rotation V1 comprise entre 8 000 et 12 000 tours par minute, de préférence 10 000 tours par minute.

Cette gamme de vitesse de rotation du foret permet une évacuation optimale des copeaux, notamment dans l'aluminium.

De préférence, à l'étape de perçage profond, le foret est entrainé en rotation à une vitesse de rotation V2 d'approche lorsqu'il est introduit dans le tunnel réalisé à l'étape de pré-perçage, V2 étant inférieure à V1.

Cette disposition permet d'éviter d'amplifier le faux rond du foret long. Ainsi, l'extrémité du foret long peut être introduite dans le trou réalisé à l'étape de pré-perçage sans risquer de toucher le bord de ce trou.

Avantageusement, le rapport de la vitesse de rotation V1 sur la vitesse de rotation V2 est compris entre 10 et 100, de préférence 20.

Avantageusement, le procédé pour le perçage d'un tunnel de réception comporte une étape de fraisage avant l'étape de perçage.

Cette disposition permet de préparer une surface de perçage plane et perpendiculaire à un axe longitudinal du foret. Ainsi, on ne génère pas d'effort latéral sur le foret lors de l'étape de pré-perçage. En conséquence, la durée de vie du foret sera améliorée.

De préférence, la matière du fond dans lequel est réalisé le tunnel de réception est de l'aluminium.

Selon l'invention il est également proposé un récipient de cuisson selon la revendication 13 comportant une calotte comprenant un fond présentant une épaisseur (e) et un tunnel de réception d'un capteur, notamment d'un capteur de température, ledit tunnel de réception étant agencé dans l'épaisseur (e), caractérisé en ce que le tunnel de réception est rectiligne et présente une première portion de diamètre D1 suivie d'une deuxième portion de diamètre D2, D1 étant supérieur à D2, et en ce qu'il est est réalisé selon le procédé précédemment décrit.

Ainsi, le tunnel de réception du capteur présente une succession d'une première et deuxième portion. La première portion de plus grand diamètre permet de guider le capteur lors de son introduction dans le tunnel de réception et la deuxième portion de plus petit diamètre est ajustée à la taille du capteur pour permettre un positionnement précis, voir un léger serrage du capteur au fond du tunnel de réception. En conséquence, le capteur ne peut pas se déplacer et va mesurer la température du fond de manière répétitive et fiable dans le temps.

De préférence, le récipient de cuisson est une poêle, une casserole, une sauteuse, un faitout ou un autocuiseur.

L'invention sera mieux comprise à l'étude des modes de réalisation pris à titre nullement limitatif et illustrés dans les figures annexées dans lesquelles :
- La figure 1 illustre une vue en perspective d'une calotte d'un récipient de cuisson comportant un tunnel de réception d'un capteur selon un mode particulier de réalisation de l'invention.
- La figure 2 illustre une vue partielle de la calotte et du tunnel de réception suivant la direction II illustrée à la figure 1.
- La figure 3 illustre une vue schématique en coupe partielle de la calotte brute, sans le tunnel de réception, suivant la ligne III - III illustrée à la figure 1.
- La figure 4 illustre une vue schématique en coupe partielle de la calotte illustrée à la figure 3, à l'étape de fraisage.
- La figure 5 illustre une vue schématique en coupe partielle de la calotte illustrée à la figure 3, après l'étape de fraisage.
- La figure 6 illustre une vue schématique en coupe partielle de la calotte illustrée à la figure 3, à l'étape de pré-perçage.
- La figure 7 illustre une vue schématique en coupe partielle de la calotte illustrée à la figure 3, après l'étape de pré-perçage.
- La figure 8 illustre une vue schématique en coupe partielle de la calotte illustrée à la figure 3, à l'étape de perçage profond.
- La figure 9 illustre une vue schématique en coupe partielle de la calotte illustrée à la figure 3, après l'étape de perçage profond.

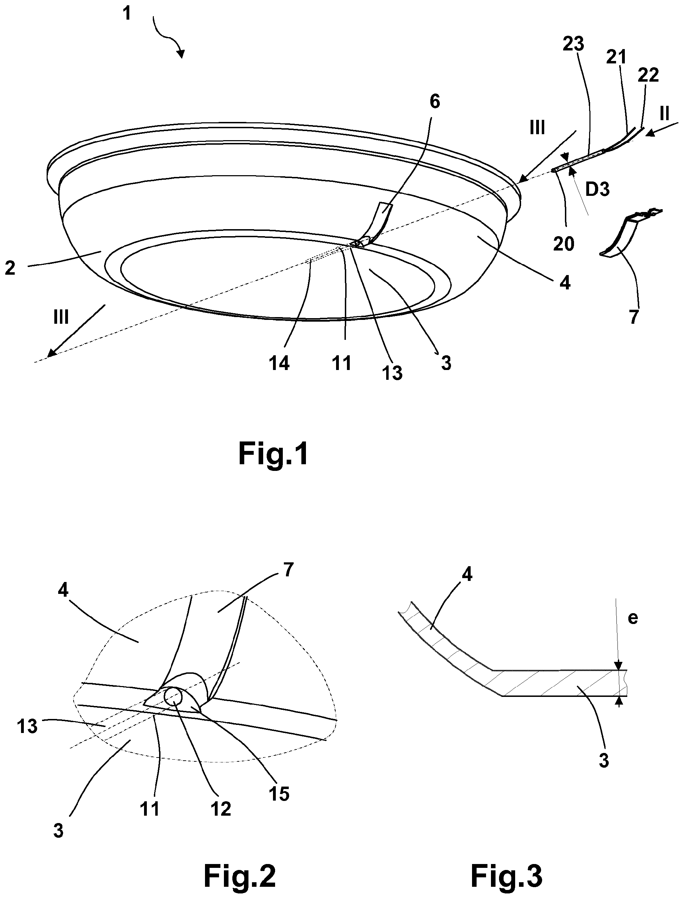

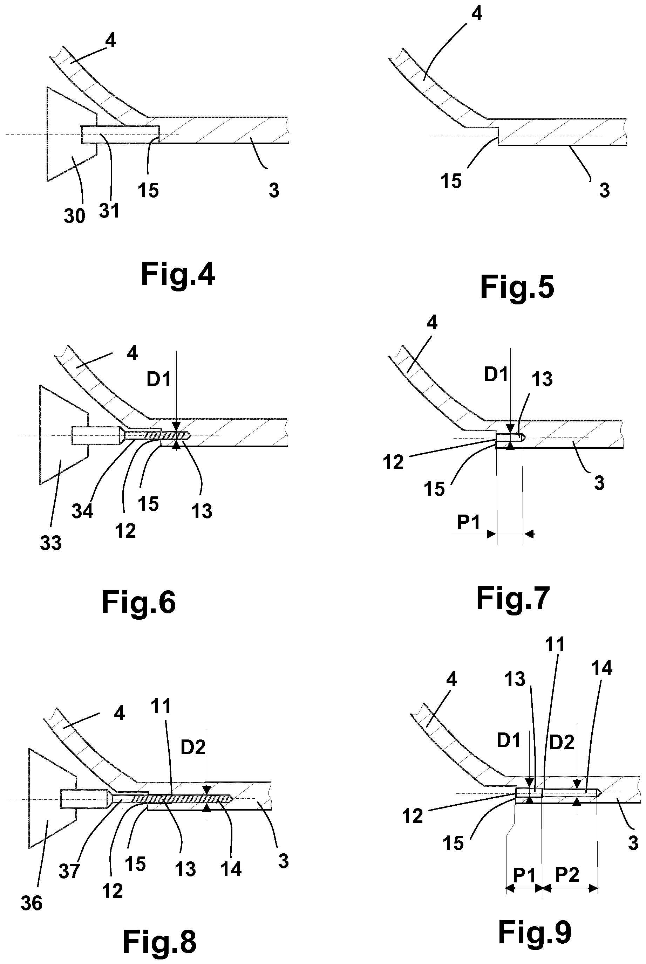

Tel que visible aux figures 1 et 2, une calotte 2 d'un récipient de cuisson 1 comporte un fond 3 et une paroi latérale 4. La calotte 2 est réalisée en aluminium, par exemple, par frappe d'un disque ou par une opération de fonderie. Le fond 3 présente une épaisseur (e) égale à 4 millimètres dans laquelle est agencé un tunnel de réception 11 d'un capteur 20. Le tunnel de réception 11 forme une ouverture 12 dans la paroi latérale 4 et s'étend, à partir de cette ouverture 12, radialement vers le centre du fond 3. Le tunnel de réception 11 comporte à partir de l'ouverture 12 une première portion 13 formée par un trou cylindrique de diamètre D1 (Fig.9), puis une deuxième portion 14 formée par un trou cylindrique de diamètre D2 (Fig.9), le diamètre D1 étant supérieur au diamètre D2. Les première et deuxième portions 13, 14 présentent un même axe longitudinal.

Le capteur 20, visible sur la figure 1, est notamment un capteur de température, formé par une CTN ou un thermocouple. Par CTN, on comprend une thermistance à Coefficient de Température Négatif. Le capteur 20 de température est muni de deux éléments conducteurs 21, 22 isolés qui sont agencés dans une gaine tubulaire 23 en acier inoxydable, obturée à une extrémité. Le capteur 20 de température est positionné au fond de la gaine tubulaire 23, à proximité de l'extrémité obturée. Les éléments conducteurs 21, 22 sont reliés électriquement à un circuit électronique (non illustré sur les figures) pour traiter la grandeur mesurée par le capteur 20 de température et afficher la température.

La gaine tubulaire 23 présente un diamètre D3 sensiblement constant sur la longueur de la gaine tubulaire. Le diamètre D3 est très légèrement inférieur au diamètre D2 de la deuxième portion 14 pour que la gaine tubulaire 23, une fois insérée complètement dans le tunnel de réception 11 soit maintenue en position de manière ajustée, quasiment sans jeu. Le diamètre D2 étant plus petit que le diamètre D1, il existe un jeu plus important de la gaine tubulaire 23 dans la première portion 13. La première portion 13 sert ainsi de zone de guidage de la gaine tubulaire 23 lors de son introduction dans le tunnel de réception 11.

La paroi latérale 4 comporte une rainure 6 s'étendant à partir de l'ouverture 12 du tunnel de réception 11, vers le haut de la paroi latérale 4. La rainure 6 est destinée à recevoir les éléments conducteurs 21, 22, une fois la gaine tubulaire 23 introduite dans le tunnel de réception 11. Un capot de protection 7 est agencé sur la rainure 6 pour former un canal de protection du capteur 20 et des éléments conducteurs 21, 22.

Le récipient de cuisson comporte une poignée (non représentée sur les figures) dont une extrémité est fixée sur la paroi latérale par des moyens de fixation (non représentés sur les figures). Les éléments conducteurs 21, 22 et le capot de protection 7 sont agencés sur la poignée.

Les figures 3 à 9 illustrent les différentes étapes de réalisation du procédé pour le perçage du tunnel de réception 11 du capteur 20. Une coupe partielle de la calotte 2 brute est illustrée à la figure 3.

La première étape du procédé consiste à réaliser par fraisage une surface plane 15 dans la paroi latérale 4, au niveau du fond 3. Une tête d'usinage 30 entraine une fraise 31 à bout plat en rotation et cette tête d'usinage 30 est animée d'un mouvement d'avance selon une direction radiale par rapport au fond 3 (Fig.4). Ainsi, le bout plat de la fraise 31 va réaliser la surface plane 15 qui est perpendiculaire au fond 3 (Fig.5)

L'étape suivante du procédé consiste en une étape de pré-perçage de la première portion 13 sous la forme d'un trou de diamètre D1, par exemple, 2,55 millimètres et de profondeur P1 égale à 13 millimètres dans l'épaisseur du fond 3. Une tête de perçage 33 met en rotation un foret 34 court à une vitesse V1 de, par exemple, 10 000 tours par minute et génère un mouvement d'avance axiale du foret 34. La tête de perçage 33 est animée d'un mouvement d'avance selon la même direction radiale par rapport au fond 3 que celle de la tête d'usinage 30 (Fig.6). Ainsi le foret 34 va réaliser la première portion 13 du tunnel de réception 11 de profondeur P1 (Fig.7). Dans une variante de réalisation, une oscillation axiale à une fréquence donnée peut être superposée au mouvement d'avance du forêt 34.

Le procédé comporte ensuite une étape de perçage profond de la deuxième portion 14 sous la forme d'un trou de diamètre D2, par exemple, 2,5 millimètres et de profondeur P2 égale à 47 millimètres dans l'épaisseur du fond 3. De la même manière que pour le pré-perçage, une tête de perçage 36 met en rotation un foret

37 long à une vitesse de, par exemple, 10 000 tours par minute et génère un mouvement d'avance axiale du foret 37. La tête de perçage 36 est animée d'un mouvement d'avance selon la même direction radiale par rapport au fond 3 que celle de la tête d'usinage 30 et que celle de la tête de perçage 33 (Fig.8). Ainsi le foret 37 va réaliser la deuxième portion 14 du tunnel de réception 11 (Fig.9). La profondeur totale P1+P2 du tunnel de réception 11 est donc égale à 60 millimètres. Dans une variante de réalisation, une oscillation axiale à une fréquence donnée peut être superposée au mouvement d'avance du forêt 37.

Dans une variante de réalisation, lors de l'étape de perçage profond, le foret 37 long est entrainé en rotation à une vitesse de rotation V2 de 500 tours par minute lorsqu'il est introduit dans la première portion 13 réalisée à l'étape de pré-perçage et il est entrainé à la vitesse V1 de 10 000 tours par minute juste avant que le foret 37 ne commence le perçage correspondant à la deuxième portion 14 du tunnel de réception 11.

Bien entendu, l'invention n'est nullement limitée aux modes de réalisation décrits et illustrés qui n'ont été donnés qu'à titre d'exemple. Des modifications restent possibles dans le cadre des revendications, notamment du point de vue de la constitution des divers éléments ou par substitution d'équivalents techniques, sans sortir pour autant du domaine de protection de l'invention.

Ainsi, dans une variante de réalisation, le récipient de cuisson comporte une calotte en aluminium dont une face externe du fond est muni d'une plaque perforée en acier inoxydable. Le tunnel de réception est réalisé dans l'épaisseur de la partie en aluminium du fond.

## Revendications

1. Procédé pour le perçage d'un tunnel de réception (11) d'un capteur (20), notamment d'un capteur de température, dans un récipient de cuisson (1) comportant une calotte (2) comprenant un fond (3) présentant une épaisseur (e) dans laquelle est réalisé ledit tunnel de réception (11), **caractérisé en ce que** ledit procédé comporte une étape de pré-perçage mettant en oeuvre un foret (34) de diamètre D1 pour réaliser une première portion (13) du tunnel de réception (11) et une étape de perçage profond mettant en oeuvre un foret (37) de diamètre D2 pour réaliser une deuxième portion (14) du tunnel de réception (11), D1 étant supérieur à D2.

2. Procédé pour le perçage d'un tunnel de réception (11) dans un récipient de cuisson (1) selon la revendication 1, **caractérisé en ce que** le rapport entre diamètre D1 et le diamètre D2 est compris 1,005 et 1,05 de préférence entre 1,01 et 1,02.

3. Procédé pour le perçage d'un tunnel de réception (11) dans un récipient de cuisson (1) selon la revendication 2, **caractérisé en ce que** le diamètre D2 est compris entre 2 et 3 millimètres, de préférence 2,5 millimètres

4. Procédé pour le perçage d'un tunnel de réception (11) dans un récipient de cuisson (1) selon l'une quelconque des revendications précédentes, **caractérisé en ce que** la première portion (13) du tunnel de réception (11) présente une profondeur (P1) et **en ce que** la deuxième portion (14) présente une profondeur (P2), le rapport entre P2 et P1 étant compris entre 2 et 5, de préférence entre 3 et 4,5.

5. Procédé pour le perçage d'un tunnel de réception (11) dans un récipient de cuisson (1) selon la revendication 4, **caractérisé en ce que** la profondeur (P1+P2) du tunnel de réception (11) est comprise entre 50 et 70 millimètres, de préférence 60 millimètres.

6. Procédé pour le perçage d'un tunnel de réception (11) dans un récipient de cuisson (1) selon l'une quelconque des revendications précédentes, **caractérisé en ce qu'**à au moins une étape de perçage, une tête de perçage (33, 36) met en rotation un foret (34, 37) et génère un mouvement d'avance axiale dudit foret (34, 37) sur lequel est superposé une oscillation axiale à une fréquence donnée.

7. Procédé pour le perçage d'un tunnel de réception (11) dans un récipient de cuisson (1) selon la revendication 6, **caractérisé en ce que** la fréquence de l'oscillation axiale appliquée au foret (34, 37) est une basse fréquence de quelques hertz.

8. Procédé pour le perçage d'un tunnel de réception (11) dans un récipient de cuisson (1) selon l'une quelconque des revendications précédentes, **caractérisé en ce qu'**aux étapes de pré-perçage et de perçage profond, les forets (34, 37) sont entrainés en rotation à une vitesse de rotation V1 comprise entre 8 000 et 12 000 tours par minute, de préférence 10 000 tours par minute.

9. Procédé pour le perçage d'un tunnel de réception (11) dans un récipient de cuisson (1) selon la revendication 8, **caractérisé en ce qu'**à l'étape de perçage profond, le foret (37) est entrainé en rotation à une vitesse de rotation V2 d'approche lorsqu'il est introduit dans la première portion (13) réalisé à l'étape de pré-perçage, V2 étant inférieure à V1.

10. Procédé pour le perçage d'un tunnel de réception (11) dans un récipient de cuisson (1) selon la revendication 9, caractérisé en ce le rapport de la vitesse de rotation V1 sur la vitesse de rotation V2 est compris entre 10 et 100, de préférence 20.

11. Procédé pour le perçage d'un tunnel de réception (11) dans un récipient de cuisson (1) selon l'une quelconque des revendications précédentes, **caractérisé en ce qu'**il comporte une étape de fraisage avant l'étape de perçage.

12. Procédé pour le perçage d'un tunnel de réception (11) dans un récipient de cuisson (1) selon l'une quelconque des revendications précédentes, **caractérisé en ce que** la matière du fond (3) dans lequel est réalisé le tunnel de réception (11) est de l'aluminium.

13. Récipient de cuisson (1) comportant une calotte (2) comprenant un fond (3) présentant une épaisseur (e) et un tunnel de réception (11) d'un capteur (20), notamment d'un capteur de température, ledit tunnel de réception (11) étant agencé dans l'épaisseur (e), **caractérisé en ce que** le tunnel de réception (11) est rectiligne et présente une première portion de diamètre D1 suivie d'une deuxième portion de diamètre D2, D1 étant supérieur à D2, et **en ce qu'**il est réalisé par le procédé selon l'une quelconque des revendications précédentes.

14. Récipient de cuisson (1) selon la revendication 13, **caractérisé en ce qu'**il est une poêle, une casserole, une sauteuse, un faitout ou un autocuiseur.

## Patentansprüche

1. Verfahren zum Bohren eines Aufnahmetunnels (11) eines Sensors (20), insbesondere eines Temperatursensors, in ein Kochgefäß (1), aufweisend eine Kalotte (2), die einen Boden (3) umfasst, der eine Dicke (e) vorweist, in der ein Aufnahmetunnel (11) hergestellt wird, **dadurch gekennzeichnet, dass** das Verfahren einen Vorbohrschritt unter Verwendung eines Bohrers (34) mit einem Durchmesser D1, um einen ersten Abschnitt (13) des Aufnahmetunnels (11) herzustellen, und einen Tiefbohrschritt unter Verwendung eines Bohrers (37) mit einem Durchmesser D2 umfasst, um einen zweiten Abschnitt (14) des Aufnahmetunnels (11) herzustellen, wobei D1 größer als D2 ist.

2. Verfahren zum Bohren eines Aufnahmetunnels (11) in ein Kochgefäß (1) nach Anspruch 1, **dadurch gekennzeichnet, dass** das Verhältnis von dem Durchmesser D1 zu dem Durchmesser D2 zwischen 1,005 und 1,05, vorzugsweise 1,01 und 1,02, beträgt.

3. Verfahren zum Bohren eines Aufnahmetunnels (11) in ein Kochgefäß (1) nach Anspruch 2, **dadurch gekennzeichnet, dass** der Durchmesser D2 zwischen 2 und 3 Millimeter, vorzugsweise 2,5 Millimeter, beträgt.

4. Verfahren zum Bohren eines Aufnahmetunnels (11) in ein Kochgefäß (1) nach einem der vorhergehenden Ansprüche, **dadurch gekennzeichnet, dass** der erste Abschnitt (13) des Aufnahmetunnels (11) eine Tiefe (P1) vorweist, und dass der zweite Abschnitt (14) eine Tiefe (P2) vorweist, wobei das Verhältnis zwischen P2 und P1 zwischen 2 und 5, vorzugsweise zwischen 3 und 4,5 beträgt.

5. Verfahren zum Bohren eines Aufnahmetunnels (11) in ein Kochgefäß (1) nach Anspruch 4, **dadurch gekennzeichnet, dass** die Tiefe (P1 + P2) des Aufnahmetunnels (11) zwischen 50 und 70 Millimeter, vorzugsweise 60 Millimeter, beträgt.

6. Verfahren zum Bohren eines Aufnahmetunnels (11) in ein Kochgefäß (1) nach einem der vorhergehenden Ansprüche, **dadurch gekennzeichnet, dass** in mindestens einem Bohrschritt ein Bohrkopf (33, 36) einen Bohrer (34, 37) in Drehung versetzt dreht und eine axiale Vorschubbewegung des Bohrers (34, 37) erzeugt, die von einer axialen Schwingung mit einer vorgegebenen Frequenz überlagert ist.

7. Verfahren zum Bohren eines Aufnahmetunnels (11) in ein Kochgefäß (1) nach Anspruch 6, **dadurch gekennzeichnet, dass** die Frequenz der auf den Bohrer (34, 37) ausgeübten axialen Schwingung eine niedrige Frequenz von ein paar Hertz ist.

8. Verfahren zum Bohren eines Aufnahmetunnels (11) in ein Kochgefäß (1) nach einem der vorhergehenden Ansprüche, **dadurch gekennzeichnet, dass** die Bohrer (34, 37) im Vorbohr- und Tiefbohrschritt mit einer Drehzahl V1 zwischen 8.000 und 12.000 U / min., vorzugsweise 10.000 U / min., in Drehung versetzt werden.

9. Verfahren zum Bohren eines Aufnahmetunnels (11) in ein Kochgefäß (1) nach Anspruch 8, **dadurch gekennzeichnet, dass** im Tiefbohrschritt der Bohrer (37) mit einer Drehzahl V2 zur Annäherung in Drehung versetzt wird, wenn er in den ersten Abschnitt (13) eingeführt wird, der im Vorbohrschritt hergestellt wurde, wobei V2 kleiner als V1 ist.

10. Verfahren zum Bohren eines Aufnahmetunnels (11) in ein Kochgefäß (1) nach Anspruch 9, **dadurch gekennzeichnet, dass** das Verhältnis der Drehzahl V1 zu der Drehzahl V2 10 bis 100, vorzugsweise 20, beträgt.

11. Verfahren zum Bohren eines Aufnahmetunnels (11) in ein Kochgefäß (1) nach einem der vorhergehenden Ansprüche, **dadurch gekennzeichnet, dass** es vor dem Bohrschritt einen Frässchritt umfasst.

12. Verfahren zum Bohren eines Aufnahmetunnels (11) in ein Kochgefäß (1) nach einem der vorhergehenden Ansprüche, **dadurch gekennzeichnet, dass** das Material des Bodens (3), in dem der Aufnahmetunnel (11) hergestellt wird, Aluminium ist.

13. Kochgefäß (1), aufweisend eine Kalotte (2), die einen Boden (3) umfasst, der eine Dicke (e) und einen Aufnahmetunnel (11) eines Sensors (20), insbesondere eines Temperatursensors, vorweist, wobei der Aufnahmetunnel (11) in der Dicke (e) angeordnet ist, **dadurch gekennzeichnet, dass** der Aufnahmetunnel (11) geradlinig ist und einen ersten Abschnitt mit dem Durchmesser D1 vorweist, der von einem zweiten Abschnitt mit dem Durchmesser D2 gefolgt wird, wobei D1 größer als D2 ist, und dass er nach dem Verfahren nach einem der vorhergehenden Ansprüche hergestellt wird.

14. Kochgefäß (1) nach Anspruch 13, **dadurch gekennzeichnet, dass** es eine Pfanne, ein Kochtopf, eine Bratpfanne, ein Schmortopf oder ein Schnellkochtopf ist.

## Claims

1. Method for drilling a reception tunnel (11) of a sensor (20), in particular of a temperature sensor, in a cooking container (1) comprising a cap (2) comprising a bottom (3) having a thickness (e) in which is formed said reception tunnel (11), **characterised in that** said method comprises a pre-drilling step using a drill bit (34) of diameter D1 in order to form a first portion (13) of the reception tunnel (11) and a deep drilling step using a drill bit (37) of diameter D2 to form a second portion (14) of the reception tunnel (11), D1 being greater than D2.

2. Method for drilling a reception tunnel (11) in a cooking container (1) according to claim 1, **characterised in that** the ratio between diameter D1 and the diameter D2 is between 1.005 and 1.05 preferably between 1.01 and 1.02.

3. Method for drilling a reception tunnel (11) in a cooking container (1) according to claim 2, **characterised in that** the diameter D2 is between 2 and 3 millimetres, preferably 2.5 millimetres.

4. Method for drilling a reception tunnel (11) in a cooking container (1) according to any preceding claims, **characterised in that** the first portion (13) of the reception tunnel (11) has a depth (P1) and **in that** the second portion (14) has a depth (P2), the ratio between P2 and P1 being between 2 and 5, preferably between 3 and 4.5.

5. Method for drilling a reception tunnel (11) in a cooking container (1) according to claim 4, **characterised in that** the depth (P1 +P2) of the reception tunnel (11) is between 50 and 70 millimetres, preferably 60 millimetres.

6. Method for drilling a reception tunnel (11) in a cooking container (1) according to any preceding claims, **characterised in that** in at least one step of drilling, a drill head (33, 36) sets in rotation a drill bit (34, 37) and generates an axial forward movement of said drill bit (34, 37) whereon an axial oscillation at a given frequency is superimposed.

7. Method for drilling a reception tunnel (11) in a cooking container (1) according to claim 6, **characterised in that** the frequency of the axial oscillation applied to the drill bit (34, 37) is a low frequency of a few hertz.

8. Method for drilling a reception tunnel (11) in a cooking container (1) according to any preceding claims, **characterised in that** in the pre-drilling and deep drilling steps, the drill bits (34, 37) are driven in rotation at a speed of rotation V1 between 8,000 and 12,000 rpm, preferably 10,000 rpm.

9. Method for drilling a reception tunnel (11) in a cooking container (1) according to claim 8, **characterised in that** in the deep drilling step, the drill bit (37) is driven in rotation at a speed of rotation V2 for approaching when it is introduced into the first portion (13) formed in the pre-drilling step, V2 being less than V1.

10. Method for drilling a reception tunnel (11) in a cooking container (1) according to claim 9, **characterised in that** the ratio of the speed of rotation V1 over the speed of rotation V2 is between 10 and 100, preferably 20.

11. Method for drilling a reception tunnel (11) in a cooking container (1) according to any preceding claims, **characterised in that** it comprises a step of milling before the drilling step.

12. Method for drilling a reception tunnel (11) in a cooking container (1) according to any preceding claims, **characterised in that** the material of the bottom (3) in which the reception tunnel (11) is made is aluminium.

13. Cooking container (1) comprising a cap (2) comprising a bottom (3) having a thickness (e) and a reception tunnel (11) of a sensor (20), in particular of a temperature sensor, said reception tunnel (11) being arranged in the thickness (e), **characterised in that** the reception tunnel (11) is straight and has a first portion of diameter D1 followed by a second portion of diameter D2, D1 being greater than D2, and **in that** it is formed by the method according to any preceding claims.

14. Cooking container (1) according to claim 13, **characterised in that** it is a skillet, a saucepan, a saute pan, a stew pot or a pressure cooker.
